# EUROPÄISCHE PATENTSCHRIFT

(11) **EP 2 924 477 B1**
(45) Veröffentlichungstag und Bekanntmachung des Hinweises auf die Patenterteilung: **08.05.2019**
(21) Anmeldenummer: 15159167.4
(22) Anmeldetag: 16.03.2015
(51) Int. Cl.: G02B 3/14, G02B 26/00, G06K 7/10, G01S 7/481

(54) **OPTOELEKTRONISCHE VORRICHTUNG UND VERFAHREN ZUR ERFASSUNG VON OBJEKTINFORMATIONEN**
OPTOELECTRONIC DEVICE AND METHOD FOR RECORDING OBJECT INFORMATION
DISPOSITIF OPTOÉLECTRONIQUE ET PROCÉDÉ DE DÉTECTION D'INFORMATIONS D'OBJETS

(30) Priorität: 24.03.2014 DE 102014104027
(43) Veröffentlichungstag der Anmeldung: 30.09.2015
(73) Patentinhaber: SICK AG, 79183 Waldkirch (DE)
(72) Erfinder: Schneider, Florian, 79276 Reute (DE); Bertz, Denise, 79194 Gundelfingen (DE); Strohmeier, Dirk, 79104 Freiburg (DE)
(74) Vertreter: Hehl, Ulrich

(56) Entgegenhaltungen:
- EP-A1- 2 657 881
- WO-A1-2004/051323
- DE-U1-202009 012 114
- DE-U1-202012 105 023

## Beschreibung

Die Erfindung betrifft eine optoelektronische Vorrichtung und ein Verfahren zur Erfassung von Objektinformationen nach dem Oberbegriff von Anspruch 1 beziehungsweise 9.

Optische Sensoren nutzen diverse Prinzipien, um Informationen in mehreren Dimensionen zu erfassen. Lange bekannt sind die in zwei Richtungen ausgedehnten Bildsensoren einer Kamera. Durch verschiedene Verfahren zur Entfernungsschätzung, beispielsweise Stereoskopie, Lichtschnittverfahren oder Lichtlaufzeitmessung, werden auch 3D-Kameras möglich.

Statt wie in einer Kamera das Sichtfeld gleichzeitig in einer einzigen Aufnahme zu erfassen, nutzen scannende Systeme bewegliche Teile, um durch Abtastung nach und nach einen größeren Sichtbereich zu erfassen. Beispiele hierfür sind verschwenkbare Kamerazeilen zur Erfassung eines 2D-Standbildes, bewegliche Kameras zur Aufnahme einer Szenerie aus mehreren Perspektiven mit Verrechnung zu 3D-Bildern nach dem Stereoskopieprinzip, sowie Laserscanner. Statt der direkten Bewegung des Sensors werden regelmäßig bewegliche Spiegelelemente verwendet. So wird etwa die Abtastung einer Überwachungsebene in einem Laserscanner üblicherweise dadurch erreicht, dass der Sendestrahl auf einen rotierenden Drehspiegel trifft.

Die beweglichen optischen Komponenten von scannenden Systemen bringen einige Nachteile mit sich. Es entsteht ein hoher mechanischer Aufwand, um eine zuverlässige und langlebige Scanbewegung zu ermöglichen, gerade bei kardanischer Aufhängung in einem Laserscanner. Dennoch erhöht unvermeidlich der Verschleiß die Wartungsanfälligkeit. Die Trägheit der bewegten Massen begrenzt außerdem die möglichen Abtastmuster.

In nahezu jedem optischen Sensor ist eine Sende- beziehungsweise Empfangsoptik vorgesehen. Häufig wird diese Optik mit Hilfe einer Fokusverstellung auf einen bestimmten Abstand oder Abstandsbereich scharf eingestellt, indem elektromechanisch oder optomechanisch die Position der Linsen und damit die Schnittweite der Sende- oder Empfangsoptik verstellt. Solche Lösungen erfordern viel Bauraum und stellen zudem hohe Ansprüche an den mechanischen Aufbau zur präzisen Einstellbarkeit, damit eine vorgegebene Fokuslage auch tatsächlich angenommen wird. Eine Alternative ist der Einsatz von Optiken, bei denen nicht die Schnittweite, sondern unmittelbar die Form und damit die Brennweite der Linse selbst mittels einer Spannungsansteuerung variiert wird. Insbesondere werden dafür Gel- oder Flüssiglinsen genutzt. Bei einer Gellinse wird eine silikonartige Flüssigkeit mittels piezoelektrischer oder induktiver Aktoren mechanisch deformiert. Flüssiglinsen nutzen beispielsweise den sogenannten Elektrobenetzungseffekt (electrowetting) aus, indem zwei nicht mischbare Flüssigkeiten in einer Kammer übereinander angeordnet werden. Bei Anlegen einer Steuerspannung ändern die beiden Flüssigkeiten ihre Oberflächenspannung in unterschiedlicher Weise, so dass die innere Grenzfläche der Flüssigkeiten spannungsabhängig ihre Krümmung verändert. Ein optoelektronischer Sensor mit Fokusverstellung auf Basis von Flüssiglinsen ist aus der DE 10 2005 015 500 A1 oder der DE 20 2006 017 268 U1 bekannt.

In Weiterbildung solcher Flüssiglinsen zur Fokusverstellung schlägt die EP 2 071 367 A1 vor, auch die Verkippung der Flüssiglinse durch Anlegen unterschiedlicher Spannungen in Umlaufrichtung zu verändern. Um die Aufnahme verwackelter Bilder zu verhindern, wird dann die Eigenbewegung der Kamera ermittelt, und eine oder mehrere Linsen in der Kamera werden verkippt, um dieser Eigenbewegung entgegenzuwirken. Das führt allerdings nicht zu einer Erweiterung des Sichtbereichs der Kamera, sondern nur zu verbesserten Bildern innerhalb des vorgegebenen Sichtbereichs durch Ausgleichsbewegungen während einer einzigen Belichtung und ist damit gerade das Gegenteil eines scannenden Systems.

In der DE 10 2005 015 500 A1 wird ein weiterer optoelektronischer Sensor mit einer Flüssiglinse offenbart, die durch einen asymmetrischen Rahmen oder unterschiedliche elektrische Potentiale an separaten Elektroden des Linsenrahmens in ihren Strahlformungseigenschaften asymmetrisch veränderbar ist. Das Dokument erläutert dann aber nicht, wozu das genutzt werden kann.

Die DE 20 2012 105 023 U1 beschreibt ein Handlaserentfernungsmessgerät mit einer Flüssiglinse, die das Zittern eines Bedieners in zwei zueinander senkrechten Richtungen ausgleichen kann.

Die WO 2004/051323 A1 befasst sich mit einer Vorrichtung zum Formen unterschiedlicher Meniskuskonfigurationen an der Grenzfläche zweier unterschiedlicher Fluide. Dadurch kann unter anderem der Fokus und die Abbildungsrichtung variiert werden.

Es ist daher Aufgabe der Erfindung, die Erfassung von Objektinformationen in einer gattungsgemäßen Vorrichtung zu verbessern.

Diese Aufgabe wird durch eine optoelektronische Vorrichtung und ein Verfahren zur Erfassung von Objektinformationen nach Anspruch 1 beziehungsweise 9 gelöst. Die Vorrichtung weist eine adaptive Linse auf, die durch Verkippen in verschiedene Ausrichtungen gebracht werden kann. Die Erfindung geht nun von dem Grundgedanken aus, die adaptive Linse durch Ansteuerung mit entsprechenden Steuersignalen in mehrere unterschiedliche Kippstellungen zu bringen und die Vorrichtung so wiederholt neu auszurichten. Dadurch werden Empfangssignale aus mehreren unterschiedlichen Teilbereichen einer Szenerie erfasst. Es entsteht gegenüber dem ursprünglichen Überwachungsbereich in einer festen Kippstellung ein vergrößerter Überwachungsbereich, der durch das Verkippen abgetastet wird. Die dabei erfassten Objektinformationen sind beispielsweise pixelaufgelöste Bilddaten, die durch Abtastung und/oder gleichzeitig erfasst sein können, orts- beziehungsweise zeitaufgelöste Hell-Dunkel-Signale oder binäre (Schalt)signale, welche die Anwesenheit oder Abwesenheit von Objekten codieren.

Die Erfindung hat den Vorteil, dass die Vorrichtung gegenüber bekannten scannenden Systemen deutlich vereinfacht wird. Mit einem einfachen optischen und mechanischen Design können Messwerte der zweiten und dritten Dimension generiert werden. Die herkömmliche aufwändige Mechanik mit den beweglichen optischen Teilen ist durch die adaptiv durchstimmbare Linse ersetzt. Die geringere Komplexität ermöglicht einen kompakten, wartungsarmen und kostengünstigen Sensor.

Die adaptive Linse wird vorzugsweise auch für eine variable Fokussierung genutzt. In vielen Ausführungsformen ermöglicht die adaptive Linse diese Funktion, so dass keine zusätzlichen Bauteile benötigt werden. Die variable Fokussierung stellt die Vorrichtung insgesamt auf einen gewünschten Tiefenschärfebereich ein. Denkbar ist auch, die Fokussierung dynamisch mit der Verkippung der adaptiven Linse zu verändern.

Die adaptive Linse ist bevorzugt eine Flüssiglinse oder eine Gellinse. Solche Linsen bieten die gewünschten Einstellmöglichkeiten und sind dabei sehr bauklein und kostengünstig. Das Verkippen einer solchen Linse bedeutet natürlich nicht zwingend ein geometrisches Verkippen, sondern bezieht sich auf die optische Wirkung, die effektiv einer Verkippung entspricht.

Die adaptive Linse weist bevorzugt in Umlaufrichtung segmentierte Ansteuerelemente auf. Bei den Ansteuerelementen handelt es sich beispielsweise um segmentierte Elektroden, die eine Flüssiglinse über den Elektrobenetzungseffekt steuern. Denkbar sind weiterhin segmentierte Aktoren, insbesondere Piezoaktoren, die den Druck auf eine Flüssigkeit lokal verändern und dadurch eine Membran auf Flüssigkeit unterschiedlich krümmen, oder die direkt eine gelartige Substanz der Linse verformen. Durch die Segmentierung in Umlaufrichtung wird eine nicht rotationssymmetrische Beeinflussung der Linse ermöglicht, die zu der optischen Verkippung führt.

Die Auswertungseinheit ist bevorzugt dafür ausgebildet, die adaptive Linse entsprechend einem vorgegebenen Bewegungsmuster in die mehreren Kippstellungen zu bringen. Ein vorgegebenes Bewegungsmuster bedeutet insbesondere, dass dieses Bewegungsmuster fix und unabhängig vorab festgelegt ist, also sich nicht dynamisch beispielsweise aus einer Eigenbewegung ergibt, um diese zu kompensieren. Denkbar ist aber, zusätzlich eine Eigenbewegung zu berücksichtigen, d.h. dafür zu sorgen, dass das vorgegebene Bewegungsmuster in Überlagerung mit der Eigenbewegung entsteht. Das Bewegungsmuster der Kippbewegungen führt zu einem Pfad in der Szenerie, längs dem sich der momentane Überwachungsbereich verschiebt. Das Bewegungsmuster wird vorzugsweise periodisch wiederholt. Beispiele für einfache periodische Bewegungsmuster sind eine Hin- und Herbewegung, eine zyklisch wiederholte geradlinige Bewegung mit Rücklauf oder eine Kreisbewegung. Je nach Anwendung sind komplexere Bewegungsmuster denkbar.

Die Vorrichtung weist bevorzugt einen Lichtsender auf, dem eine Sendeoptik mit einer adaptiven Linse mit variabler Verkippung zugeordnet ist. Damit vollzieht auch das Beleuchtungsfeld des Lichtsenders wie das Sichtfeld des Lichtempfängers eine Bewegung durch die Szenerie. Vorzugsweise entsprechen sende- und empfangsseitige Verkippung einander zumindest annähernd, so dass Beleuchtungsfeld und Sichtfeld in den unterschiedlichen Kippstellungen übereinander liegen. Das lässt sich erreichen, indem Lichtsender und Lichtempfänger dieselbe adaptive Linse nutzen. Alternativ sind auch separate adaptive Linsen mit gleicher Ansteuerung denkbar. Der Lichtsender kann ein zeilenförmiges oder flächiges Beleuchtungsfeld aufweisen, beispielsweise wie ein Blitzlicht oder als Kontrastmusterbeleuchtung für ein Lichtschnittverfahren oder ein aktives Triangulationsverfahren. Ebenso denkbar ist eine punktförmige Beleuchtung, wie eine Laserdiode oder eine LED, deren Licht vorzugsweise noch mittels einer Kollimatorlinse zu einem Sendelichtstrahl gebündelt wird. Dann entsteht ein eng begrenzter Abtaststrahl, der wie bei einem Laserscanner die Szenerie abtastet.

Die Auswertungseinheit ist bevorzugt dafür ausgebildet, Objektabstände durch Bestimmen der Lichtlaufzeit zwischen Aussenden und Empfangen eines Lichtsignals zu bestimmen. Dazu sind puls- oder phasenbasierte Lichtlaufzeitverfahren denkbar. Je nach Ausprägung des Lichtsenders entsteht eine Art entfernungsmessender Laserscanner oder eine verschwenkbare Lichtlaufzeitkamera, jedoch dank der adaptiven Linse jeweils ohne bewegliche mechanische Teile wie Schwing- oder Drehspiegel.

Die Auswertungseinheit ist vorzugsweise zum Auslesen von Codeinformationen aus den Objektinformationen ausgebildet. Die Vorrichtung wird damit zu einem Codeleser, insbesondere einer Art Barcodescanner ohne bewegliche Teile.

Die Vorrichtung ist vorzugsweise eine Kamera mit vergrößertem Überwachungsbereich, und deren Auswertungseinheit ist zum Zusammenfügen eines Bildes aus den in den unterschiedlichen Kippstellungen aufgenommenen Objektinformationen ausgebildet. Die Kamera wird noch bevorzugter als kamerabasierter Codeleser genutzt. Ist der Lichtempfänger eine einfache Photodiode, so entsteht durch Kippstellungen längs einer Geraden eine Kamerazeile, und durch zweidimensionale Kippbewegung wird sogar die Aufnahme flächiger 2D-Bilder möglich. Eine andere Ausführungsform nutzt einen Zeilensensor als Lichtempfänger, und dann sorgt die Kippbewegung der adaptiven Linse für ein Verschwenken quer zur Zeilenrichtung und damit die Aufnahme von 2D-Bildern. Schließlich kann auch ein Matrixsensor verschwenkt werden, um den Sichtbereich zu erweitern. Das Zusammenfügen eines Bildes aus den sukzessive aufgenommenen Objektinformationen besteht im einfachsten Fall lediglich im Abspeichern der jeweiligen Ausschnitte des Bildes, so dass anschließend auf die zu unterschiedlichen Zeitpunkten erfassten Bildbereiche zugegriffen werden kann. Möglich ist aber auch ein intelligentes Zusammenfügen ("Stitching") zu einem größeren Bild unter Berücksichtigung von Bildinformationen in Überlappungsbereichen und/oder der jeweiligen Kippstellungen beziehungsweise Ausnutzen redundanter Bildinformation in überlappend mehrfach aufgenommenen Teilbereichen zum Erreichen einer größeren Bildschärfe oder dergleichen.

Die Auswertungseinheit ist bevorzugt zum Erzeugen dreidimensionaler Bilder nach dem Stereoskopieprinzip aus mindestens zwei Aufnahmen in unterschiedlichen Kippstellungen ausgebildet. Üblicherweise müssen für stereoskopische Aufnahmen zwei Bilder aus unterschiedlicher Perspektive aufgenommen werden, was eine Verdopplung der Kameraeinheiten und einen relativ großen Aufbau bedeutet. Alternativ wird eine Kamera bewegt, und die der stereoskopischen Auswertung zugrunde gelegten Bilder werden nacheinander aufgenommen. Mit Hilfe der adaptiven Linse kann die Perspektive ohne größeren apparativen Aufwand gewechselt und so ein dreidimensionales Bild aufgenommen werden.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung eines optoelektronischen Sensors mit einer verkippbaren adaptiven Linse;
- Fig. 2: eine weitere Ausführungsform eines optoelektronischen Sensors mit zusätzlichem Lichtsender;
- Fig. 3a: eine Darstellung einer adaptiven Linse in einer strahlaufweitenden Einstellung;
- Fig. 3b: eine Darstellung der adaptiven Linse in einer neutralen Einstellung;
- Fig. 3c: eine Darstellung der adaptiven Linse in einer strahlbündelnden Einstellung;
- Fig. 4a: eine Darstellung der adaptiven Linse mit Verkippen nach unten;
- Fig. 4b: eine Darstellung der adaptiven Linse ohne Verkippen;
- Fig. 4c: eine Darstellung der adaptiven Linse mit Verkippen nach oben; und
- Fig. 5: eine Draufsicht auf die adaptive Linse zur Illustration einer segmentierten, nicht rotationssymmetrischen Ansteuerung.

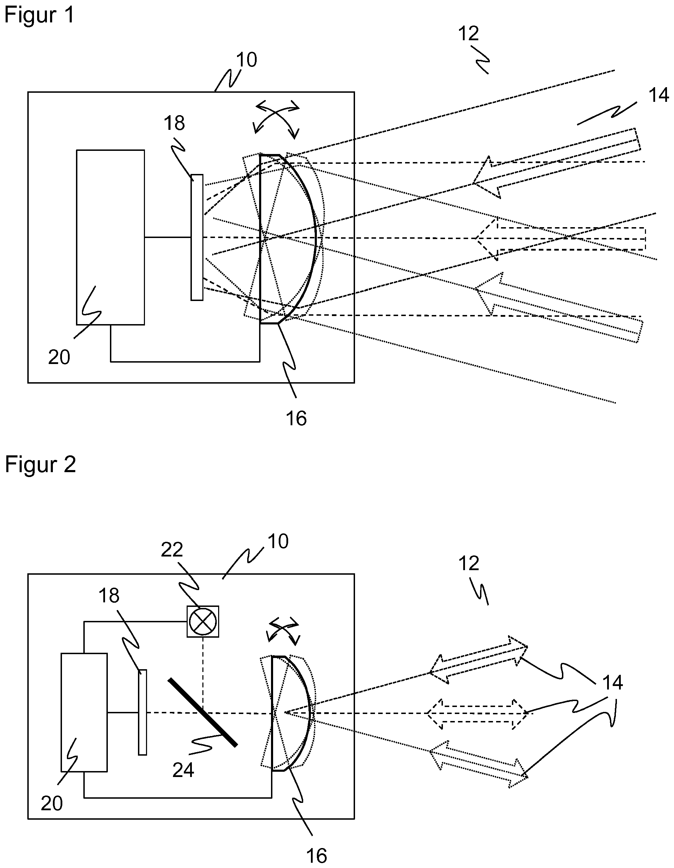

Figur 1 zeigt eine schematische Schnittdarstellung einer optoelektronischen Vorrichtung 10 zur Erfassung von Objektinformationen aus einem Überwachungsbereich 12. Licht 14 aus dem Überwachungsbereich 12 wird von einer Empfangsoptik 16 auf einen Lichtempfänger 18 geführt, der aus dem Licht 14 ein elektronisches Empfangssignal erzeugt. Dieses Empfangssignal wird an eine Auswertungseinheit 20 weitergegeben.

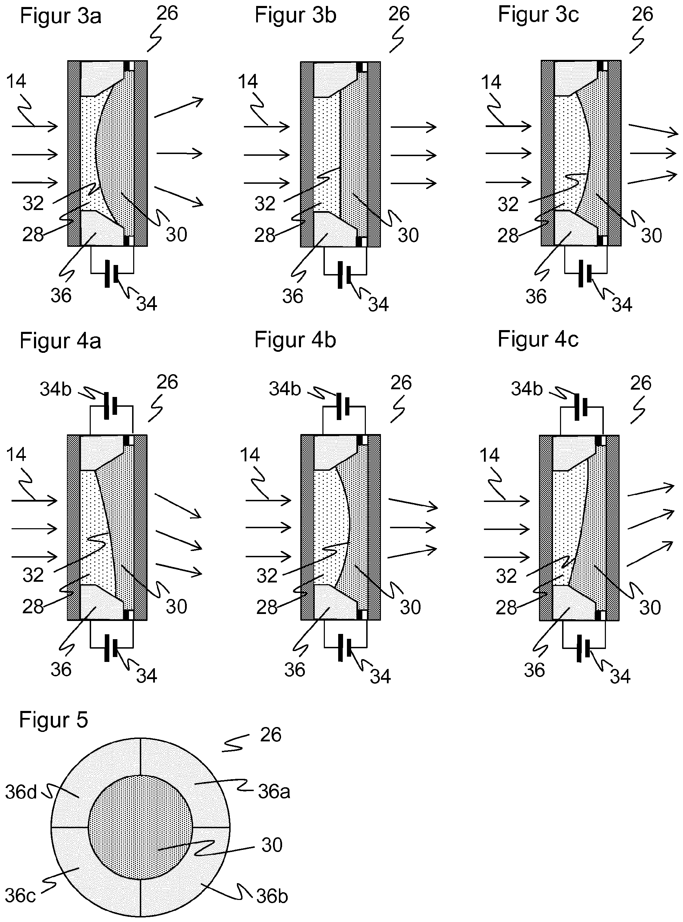

Die Empfangsoptik 16 weist eine adaptive Linse auf, die durch elektronische Ansteuerung der Auswertungseinheit 20 verkippt werden kann. Je nach Kippstellung erfasst die Vorrichtung 10 einen anderen Teilbereich und so in Überlagerung der verschiedenen Teilbereiche einen größeren Überwachungsbereich 12. In Figur 1 sind drei beispielhafte Kippstellungen durch unterschiedliche Strichlierung illustriert. Eine nicht dargestellte zusätzliche oder alternative Verkippung senkrecht zu der Papierebene ist ebenfalls denkbar. Das Funktionsprinzip der adaptiven Linse der Empfangsoptik 16 wird weiter unten anhand der Figuren 3 bis 5 näher erläutert.

Figur 2 zeigt eine weitere Ausführungsform der optoelektronischen Vorrichtung 10 mit einem zusätzlichen Lichtsender 22. Zur besseren Übersicht sind hier nur die Hauptstrahlen des Lichts 14 eingezeichnet. Mit Hilfe eines Strahlteilers 24 wird eine Autokollimationsanordnung von Lichtempfänger 18 und Lichtsender 22 erreicht. Deshalb wirkt die verkippbare Empfangsoptik 16 auch auf das Sendelicht, die Empfangsoptik 16 wird hier zu einer gemeinsamen Sende-/Empfangsoptik. Die Anordnung mit einem Strahlteiler 24 ist nur ein Beispiel. Es sind auch andere an sich bekannte optische Anordnungen wie Doppelauge oder eine biaxiale Anordnung möglich. Manchmal ist es dann vorteilhaft, eine weitere adaptive Linse einzusetzen, so dass jeweils eine Verkippmöglichkeit für Sende- und Empfangspfad geschaffen wird. Vorzugsweise werden dann aber beide adaptiven Linsen synchron und gleichartig angesteuert, so dass die jeweilige Ausrichtung der Vorrichtung 10 in Sende- und Empfangsrichtung übereinstimmt. Außerdem sind in anderen Ausführungsformen zusätzliche optische Elemente, wie starre Linsen etwa zur Sendestrahlkollimation, Blenden und dergleichen vorgesehen.

Die Figuren 1 und 2 sind Prinzipdarstellungen, die stellvertretend für eine Vielzahl von Sensoren stehen. Die Sensoren unterscheiden sich in ihren Lichtsendern 22, Lichtempfängern 18, Kippbewegungen und Auswertungen in der Auswertungseinheit 20, nicht jedoch darin, dass Objektinformationen in mehreren Kippstellungen erfasst werden. Dadurch wird eine sequentielle Abtastung ermöglicht.

Eine Gruppe von Sensoren kann zusammenfassend als Kameras bezeichnet werden. Diese Kameras können sowohl passiv nach Figur 1 als auch aktiv nach Figur 2 aufgebaut sein, also eine eigene Beleuchtung aufweisen. Ist der Lichtempfänger 18 als Zeilenbildsensor ausgebildet, so wird durch Verschwenken mittels der adaptiven Linse der Empfangsoptik 16 ein 2D-Standbild aufgenommen. Mit einem Matrixbildsensor als Lichtempfänger 18 wird durch die Verkippung eine laterale Verschiebung des optischen Hauptpunkts erzeugt. Dadurch werden mehrere nebeneinander angeordnete Bilder aus unterschiedlichen Teilbereichen mit mehr oder weniger gegenseitigem Überlapp aufgenommen, die dann durch Bildauswertung in der Auswertungseinheit 20 zu einem Gesamtbild zusammengesetzt werden können ("Stitching"). Außerdem kann auf Basis der Stereoskopie ein 3D-Oberflächenprofil berechnet werden.

Mit einem punktförmigen Lichtsender 22, etwa einer Laserdiode oder LED, und einem einfachen Lichtempfänger 18, wie einer Photodiode oder einer APD, in einer Anordnung gemäß Figur 2 entsteht ein Scanner mit einem gebündelten Abtaststrahl, der ähnlich arbeitet wie ein Laserscanner oder Barcodescanner, jedoch ohne bewegte mechanische Teile wie einen Drehspiegel auskommt. Vorzugsweise bestimmt in diesem Fall die Auswertungseinheit 20 mit einem an sich bekannten Phasen-, Einzelpuls- oder Pulsmittelungsverfahren eine Lichtlaufzeit. Daraus kann der Abstand zu dem jeweils angetasteten Objekt berechnet werden. Der aktuelle Kippwinkel ist bekannt, da die Auswertungseinheit 20 den Kippwinkel gezielt ansteuert. So wird im Verlauf der Kippbewegung ein Objektprofil in Polarkoordinaten erzeugt. Ein einfacher Hin- und Herwechsel des Kippwinkels emuliert einen Schwingspiegel. Komplexere Bewegungsmuster sind aber genauso möglich.

Es ergeben sich damit vielfältige Anwendungen für die Inspektion und Vermessung von Objekten. Durch den Einsatz an sich bekannter Signal- oder Bildverarbeitungen zum Lesen von Codes entsteht ein Barcodescanner oder ein kamerabasierter Codeleser. Schließlich wäre sogar denkbar, den Lichtempfänger 18 wegzulassen und nur das Sendelicht durch die dann allein als Sendeoptik fungierende adaptive Linse zu führen. Damit können Lichtmuster erzeugt werden, etwa als beweglicher Laserpointer.

Die Figuren 3 und 4 zeigen die adaptive Linse der Empfangsoptik 16 in einer beispielhaften Ausführungsform als Flüssiglinse 26 nach dem Elektrobenetzungseffekt. Die Funktionsweise wird anhand dieser Flüssiglinse 26 erläutert, aber die Erfindung umfasst auch andere adaptive Linsen, beispielsweise solche mit einer Flüssigkeitskammer und einer diese bedeckenden Membran, deren Wölbung durch Druck auf die Flüssigkeit verändert wird, oder Linsen mit einem gelartigen optisch durchlässigen Material, das durch eine Aktorik mechanisch verformt wird.

Die aktiv durchstimmbare Flüssiglinse 26 weist zwei transparente, nicht mischbare Flüssigkeiten 28, 30 mit unterschiedlichen Brechungsindizes und gleicher Dichte auf. Die Form der Flüssigkeits-Flüssigkeitsgrenzschicht 32 zwischen den beiden Flüssigkeiten 28, 30 wird zur optischen Funktion verwendet. Die Aktuierung basiert auf dem Prinzip der Elektrobenetzung, welche eine Abhängigkeit der Oberflächen- oder Grenzflächenspannung vom angelegten elektrischen Feld zeigt. Deshalb ist es möglich, die Form der Grenzschicht 32 und damit die optischen Eigenschaften der Flüssiglinse 26 durch elektrische Ansteuerung an einem Anschluss 34 zu verändern, wodurch entsprechende Spannungen an einer Elektrode 36 anliegen.

Figur 3 zeigt zunächst die länger bekannte Veränderung der Fokuseigenschaften der Flüssiglinse 26. In Figur 3a wird einfallendes Licht an einer konkaven Grenzschicht 32 aufgestreut. Figur 3b zeigt eine neutrale Einstellung mit flacher Grenzschicht 32, während in Figur 3c die Grenzschicht konvex ist und damit das einfallende Licht bündelt. Es ist klar, dass durch entsprechende Zwischeneinstellungen das Brechungsverhalten feiner abgestuft und beispielsweise eine Brennweite eingestellt werden kann.

Die Flüssiglinse 26 kann aber auch in ihrer Verkippung beeinflusst werden. Dies wird in Figur 4 illustriert und beruht auf nicht rotationssymmetrisch angelegten Spannungen und damit elektrischen Feldern. Dementsprechend wird die Grenzschicht 32 nicht rotationssymmetrisch verformt, was für die Verkippung ausgenutzt wird. Figur 4a zeigt eine Verkippung der Flüssiglinse 26 nach unten, Figur 4b eine rotationssymmetrische Einstellung ohne Verkippung zum Vergleich, und Figur 4c eine Verkippung der Flüssiglinse 26 nach oben. Dabei bezieht sich die Richtung der Verkippung jeweils auf die optische Wirkung, also aus welcher Richtung Licht 14 empfangen wird beziehungsweise in welche Richtung Sendelicht ausgesandt wird. Der Verkippung kann jeweils eine Fokussierung überlagert sein.

Figur 5 zeigt eine Draufsicht auf die Flüssiglinse 26, um nochmals die nicht rotationssymmetrische Ansteuerung zu erläutern. Dazu wird nämlich die Elektrode 36 segmentiert. Zur Ansteuerung der hier beispielhaft vier Segmente 36a-d kann mindestens ein in Figur 4 gezeigter zusätzlicher Anschluss 34b erforderlich werden. Durch Anlegen unterschiedlicher Spannungen an die Segmente 36a-d wird die Grenzschicht 32 in einer nicht rotationssymmetrischen Weise verformt, und deshalb kann neben der Brennweite auch eine Verkippung der Linsenform eingestellt werden.

## Patentansprüche

1. Optoelektronische Vorrichtung (10) zur Erfassung von Objektinformationen aus einem Überwachungsbereich (12) mit einem Lichtempfänger (18), einer dem Lichtempfänger (18) zugeordneten Empfangsoptik(16), die Licht aus dem Überwachungsbereich auf den Lichtempfänger führt, wobei die Empfangsoptik eine adaptive Linse (26) mit variabler Verkippung aufweist, und einer Auswertungseinheit (20), die dafür ausgebildet ist, Objektinformationen aus einem Empfangssignal des Lichtempfängers (18) zu erzeugen, indem die adaptive Linse durch Ansteuerungen in unterschiedliche Kippstellungen gebracht wird und so Bilder mehrerer unterschiedlicher Teilbereiche einer Szenerie mit mehr oder weniger gegenseitigem Überlapp erfasst werden, **dadurch gekennzeichnet,**
**dass** die Auswertungseinheit (20) ausgebildet ist zum Erzeugen dreidimensionaler Bilder nach dem Stereoskopieprinzip aus mindestens zwei Aufnahmen in unterschiedlichen Kippstellungen.

2. Vorrichtung (10) nach Anspruch 1,
wobei die adaptive Linse (26) eine Flüssiglinse oder eine Gellinse ist.

3. Vorrichtung (10) nach Anspruch 1 oder 2,
wobei die adaptive Linse (26) in Umlaufrichtung segmentierte Ansteuerelemente (36a-d) aufweist.

4. Vorrichtung (10) nach einem der vorhergehenden Ansprüche,
wobei die Auswertungseinheit (20) dafür ausgebildet ist, die adaptive Linse (26) entsprechend einem vorgegebenen Bewegungsmuster in die mehreren Kippstellungen zu bringen.

5. Vorrichtung (10) nach einem der vorhergehenden Ansprüche,
die einen Lichtsender (22) aufweist, dem eine Sendeoptik (16) mit einer adaptiven Linse (26) mit variabler Verkippung zugeordnet ist.

6. Vorrichtung (10) nach Anspruch 6,
wobei die Auswertungseinheit (20) dafür ausgebildet ist, Objektabstände durch Bestimmen der Lichtlaufzeit zwischen Aussenden und Empfangen eines Lichtsignals (14) zu bestimmen.

7. Vorrichtung (10) nach einem der vorhergehenden Ansprüche,
wobei die Auswertungseinheit (20) zum Auslesen von Codeinformationen aus den Objektinformationen ausgebildet ist.

8. Vorrichtung (10) nach einem der vorhergehenden Ansprüche,
die eine Kamera ist und deren Auswertungseinheit (20) zum Zusammenfügen eines Bildes aus den in den unterschiedlichen Kippstellungen aufgenommenen Objektinformationen ausgebildet ist.

9. Verfahren zur Erfassung von Objektinformationen aus einem Überwachungsbereich (12), bei dem Licht (14) aus dem Überwachungsbereich durch eine Empfangsoptik (16) empfangen und aus dem Licht (14) ein Empfangssignal erzeugt und ausgewertet wird, wobei die Empfangsoptik (16) eine adaptive Linse (26) aufweist, die durch Ansteuerungen in unterschiedliche Kippstellungen gebracht wird, und so mehrere Bilder unterschiedlicher Teilbereiche einer Szenerie mit mehr oder weniger gegenseitigem Überlapp erfasst werden, **dadurch gekennzeichnet,**
**dass** aus mindestens zwei Aufnahmen in unterschiedlichen Kippstellungen dreidimensionale Bilder nach dem Stereoskopieprinzip erzeugt werden.

## Claims

1. An optoelectronic apparatus (10) for the detection of object information from a monitored zone (10), comprising a light receiver (18), a receiving optics (16) associated with the light receiver (18) guiding light from the monitored zone to the light receiver, the receiving optics having an adaptive lens (26) with variable tilt, and an evaluation unit (20) configured to generate object information from a received signal of the light receiver (18) by bringing the adaptive lens into different tilt positions and thereby obtaining images of a plurality of different partial regions of a scene having more or less mutual overlap,
**characterized in that** the evaluation unit (20) is configured for the generation of three-dimensional images in accordance with the stereoscopic principle from at least two recordings in different tilt positions.

2. The apparatus (10) in accordance with claim 1,
wherein the adaptive lens (26) is a liquid lens or a gel lens.

3. The apparatus (10) in accordance with claim 1 or 2,
wherein the adaptive lens (26) has segmented control elements (36a-d) in the circumferential direction.

4. The apparatus (10) in accordance with any of the preceding claims,
wherein the evaluation unit (20) is configured to bring the adaptive lens (26) into the plurality of tilt positions in accordance with a predefined pattern of movement.

5. The apparatus (10) in accordance with any of the preceding claims,
that has a light transmitter (22) which is associated with a transmission optics (16) having an adaptive lens (26) with variable tilt.

6. The apparatus (10) in accordance with claim 5,
wherein the evaluation unit (20) is configured to determine object distances by determining the light time of flight between transmission and reception of a light signal (14).

7. The apparatus (10) in accordance with any of the preceding claims,
wherein the evaluation unit (20) is configured for the reading of code information from the object information.

8. The apparatus (10) in accordance with any of the preceding claims,
that is a camera and whose evaluation unit (20) is configured for the stitching of an image from the object information recorded in the different tilt positions.

9. A method for the detection of object information from a monitored zone (20), wherein light (14) from the monitored zone is received by a receiving optics (16) and a received signal is generated from the light (14) and is evaluated, wherein the receiving optics (16) comprises an adaptive lens (26) which is brought into different tilt positions, and thus a plurality of images from different partial regions of a scene are obtained having more or less mutual overlap,
**characterized in that** three-dimensional images are generated in accordance with the stereoscopic principle from at least two recordings in different tilt positions.

## Revendications

1. Dispositif optoélectronique (10) pour la détection d'informations d'objet en provenance d'une zone à surveiller (12), comportant un récepteur de lumière (18), une optique de réception (16) associée au récepteur de lumière (18) et menant la lumière en provenance de la zone à surveiller sur le récepteur de lumière, l'optique de réception présentant une lentille adaptative (26) à basculement variable, et unité d'évaluation (20) qui est réalisée pour générer des informations d'objet à partir d'un signal de réception du récepteur de lumière (18) du fait que la lentille adaptative est amenée par pilotage dans différentes positions basculées et que des images de plusieurs zones partielles différentes d'une scène sont ainsi acquises avec un recouvrement mutuel plus ou moins prononcé,
**caractérisé en ce que**
l'unité d'évaluation (20) est réalisée pour générer des images tridimensionnelles selon le principe de stéréoscopie à partir d'au moins deux prises dans différentes positions basculées.

2. Dispositif (10) selon la revendication 1,
dans lequel la lentille adaptative (26) est une lentille à base liquide ou une lentille à base de gel.

3. Dispositif (10) selon la revendication 1 ou 2,
dans lequel la lentille adaptative (26) comprend des éléments de pilotage (36a - d) segmentés en direction périphérique.

4. Dispositif (10) selon l'une des revendications précédentes,
dans lequel l'unité d'évaluation (20) est réalisée pour amener la lentille adaptative (26) dans lesdites plusieurs positions basculées en correspondance d'un motif de mouvement donné.

5. Dispositif (10) selon l'une des revendications précédentes,
comportant un émetteur de lumière (22) auquel est associée une optique d'émission (16) qui comprend une lentille adaptative (26) à basculement variable.

6. Dispositif (10) selon la revendication 6,
dans lequel l'unité d'évaluation (20) est réalisée pour déterminer des distances vis-à-vis de l'objet par détermination du temps de parcours de lumière entre l'émission et la réception d'un signal lumineux (14).

7. Dispositif (10) selon l'une des revendications précédentes,
dans lequel l'unité d'évaluation (20) est réalisée pour lire des informations de code à partir des informations d'objet.

8. Dispositif (10) selon l'une des revendications précédentes,
qui est une caméra et dont l'unité d'évaluation (20) est réalisée pour assembler une image à partir des informations d'objet prises dans les différentes positions basculées.

9. Procédé de détection d'informations d'objet en provenance d'une zone à surveiller (12), dans lequel une lumière (14) en provenance de la zone à surveiller est reçue par une optique de réception (16), et à partir de la lumière (14) un signal de réception est généré et évalué, l'optique de réception (16) présentant une lentille adaptative (26) qui est amenée par pilotages dans différentes postions basculées, moyennant quoi plusieurs images de différentes zones partielles d'une scène sont acquises avec un recouvrement mutuel plus ou moins prononcé ,
**caractérisé en ce que**
des images tridimensionnelles sont générées selon le principe de stéréoscopie à partir d'au moins deux prises dans différentes positions basculées.
